# EUROPÄISCHE PATENTANMELDUNG

(11) **EP 4 810 560 A2**
(43) Veröffentlichungstag der Anmeldung: **23.09.2026**
(21) Anmeldenummer: 26191394.1
(22) Anmeldetag: 26.08.2024
(51) Int. Cl.: C08L 9/06

(54) **SCHWEFELVERNETZBARE KAUTSCHUKMISCHUNG, LAUFSTREIFEN UND FAHRZEUGREIFEN**

(62) Dokumentnummer(n) der früheren Anmeldung(en) nach Art. 76 EPÜ: 24196481.6 / 4 703 424
(71) Anmelder: Continental Reifen Deutschland GmbH, 30175 Hannover (DE)
(72) Erfinder: Dr. Vatterott, Christoph, 30175 Hannover (DE); Dr. Große, Julia, 30175 Hannover (DE); Dr. Bogusz, Kathrin, 30175 Hannover (DE)
(74) Vertreter: Continental Corporation

(57) **Zusammenfassung**

Die Erfindung betrifft eine schwefelvernetzbare Kautschukmischung, einen Laufstreifen daraus sowie einen Fahrzeugreifen, der wenigstens ein Bauteil aufweist, welches zumindest zum Teil aus einer mit Schwefel vernetzten, erfindungsgemäßen Kautschukmischung besteht, wobei die Kautschukmischung einen organosilizium-modifizierten Styrol-Butadien-Kautschuk, eine Kieselsäure und ein flüssiges, organosilizium-modifiziertes Dienpolymer umfasst.

## Beschreibung

Die Erfindung betrifft eine schwefelvernetzbare Kautschukmischung, einen Laufstreifen daraus sowie einen Fahrzeugreifen, der wenigstens ein Bauteil aufweist, welches zumindest zum Teil aus einer mit Schwefel vernetzten, erfindungsgemäßen Kautschukmischung besteht, wobei die Kautschukmischung einen organosilizium-modifizierten Styrol-Butadien-Kautschuk, eine Kieselsäure und ein flüssiges, organosilizium-modifiziertes Dienpolymer umfasst.

Da die Fahreigenschaften eines Reifens, insbesondere eines Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. Durch den teilweisen oder vollständigen Ersatz des Füllstoffes Ruß durch Kieselsäure in Kautschukmischungen wurden die Fahreigenschaften in den vergangenen Jahren insgesamt auf ein höheres Niveau gebracht. Die bekannten Zielkonflikte der sich gegensätzlich verhaltenden Reifeneigenschaften bestehen allerdings auch bei kieselsäurehaltigen Laufstreifenmischungen weiterhin. So zieht beispielsweise eine Verbesserung des Nassgriffs und des Trockenbremsens in der Regel eine Verschlechterung des Rollwiderstandes, der Wintereigenschaften und des Abriebverhaltens nach sich.

Um die Zielkonflikte im Laufstreifen zu lösen, sind schon vielfältige Ansätze verfolgt worden. So hat man beispielsweise unterschiedlichste, auch modifizierte Polymere, Harze, Weichmacher und hochdisperse Füllstoffe für Kautschukmischungen eingesetzt und man hat versucht, die Vulkanisateigenschaften durch Modifikation der Mischungsherstellung zu beeinflussen.

Neben Reifen für PKW-Anwendungen spielen insbesondere zunehmend optimierte Reifen für den Lastenverkehr eine wichtige Rolle. Insbesondere LKW-Reifen erfahren häufig eine hohe Laufleistung, während dieser sich die Eigenschaften idealerweise nicht signifikant kontinuierlich verschlechtern, ehe sie ihr natürliches Ende der Lebensdauer erreicht haben. Solche Reifen erfordern daher eine lange Haltbarkeit und hohe Stabilität in ihren Eigenschaften.

Laufstreifenmischungen speziell für LKW-Reifen basieren üblicherweise auf Naturkautschuk in einer Kombination mit einem Butadienkautschuk und/oder lösungspolymerisierter Styrol-Butadienkautschuk. Als verstärkender Füllstoff wird vorrangig Ruß zusammen mit kleineren Mengen von Kieselsäure genutzt.

Im Einsatz zeichnen sich derartige Reifen im Vergleich zu PKW-Reifen durch sehr niedrige Rollwiderstandwerte, sehr gute Abriebeigenschaften und einen sehr vorteilhaften Reißwiderstand aus. Ein Nachteil hingegen ist die im Vergleich zu PKW-Laufstreifenmischungen deutlich schlechtere Leistung im Nassbremsen. Es ist bekannt, dass der Zielkonflikt Rollwiderstand zu Nassbremsen entweder durch Erhöhung der Glasübergangstemperatur (Tg) der Gesamtmischung und/oder durch Erhöhen des Füllstoffanteils, insbesondere mit einhergehender Erhöhung des Kieselsäure-Anteils zu Lasten des Rußes, verbessert werden kann. Dies führt jedoch typischerweise zu einer eintretenden Verschlechterung des Abriebwiderstands, Rollwiderstands sowie der Reißeigenschaften; Eigenschaften, die gerade für LKW-Reifen essentiell sind.

Im Stand der Technik sind verschiede Maßnahmen erwähnt, die derartige und ähnliche Zielkonflikte zu lösen versuchen.

WO 2023/104252 A1 betrifft eine schwefelvernetzbare Kautschukmischung umfassend spezifische Silane und beispielhaft Naturkautschuk und einen Styrol-Butadien-Kautschuk.

EP 3 103 654 A1 betrifft eine schwefelvernetzbare Kautschukmischung umfassend ein flüssiges Polybutadien.

WO 2009/147006 A1 betrifft eine Kautschukmischung umfassend ein spezifisches Vulkanisationssystem aus freiem Schwefel, einem Schwefeldonor und einem Silan.

Es besteht somit ein anhaltendes Interesse daran, bestehende LKW-Reifen so zu optimieren, dass sie auch nach einer vergleichsweise hohen Laufleistung weiterhin weitestgehend optimale Eigenschaften aufweisen, insbesondere ein möglichst gleichbleibend hohes Maß an Widerstandsfähigkeit gegenüber Schnitten, Einschnitten und Beschädigungen (sogenanntes Cut & Chip-Verhalten). Zudem besteht eine Notwendigkeit verbesserter Nassbremseigenschaften.

Der vorliegenden Erfindung liegt daher die Aufgabe zugrunde, eine schwefelvernetzbare Kautschukmischung bereitzustellen, die in einem entsprechenden Reifen, insbesondere einen LKW- bzw. Schwerlastreifen, ein signifikant verbessertes Cut & Chip-Verhalten aufweist (d.h. eine verbesserte Robustheit und Beständigkeit), wobei insbesondere der Rollwiderstand, der Abrieb, das Reißverhalten und/oder das Nassbremsen weiterhin auf einem hohen Niveau verbleiben oder sogar zusätzlich verbessert werden sollen.

Diese Aufgabe wird gelöst durch eine erfindungsgemäße schwefelvernetzbare Kautschukmischung umfassend
(a) mindestens einen Polyisopren-Kautschuk in einer Gesamtmenge von 51 bis 95 phr,
(b) mindestens einen Styrol-Butadien-Kautschuk in einer Gesamtmenge von 5 bis 49 phr,
(c) mindestens eine Kieselsäure mit einer BET-Oberfläche in einem Bereich von 225 bis 400 m²/g in einer Gesamtmenge von 30 bis 95 phr;
(d) mindestens ein Silan in einer Gesamtmenge von 1 bis 20 phf ausgewählt aus der Gruppe bestehend aus geblockten Mercaptosilanen, ungeblockten Mercaptosilanen und polysulfidischen Silanen,
   wobei
   - der Styrol-Butadien-Kautschuk gemäß b) organosilizium-modifiziert ist und mindestens einer eine Glasübergangstemperatur Tg gemäß DSC in einem Bereich von -45 bis -5°C aufweist,
   und die Mischung zusätzlich umfasst
(e) mindestens ein flüssiges Dienpolymer, welches organosilizium-modifiziert ist, und ein gewichtsmittleres Molekulargewicht Mw gemäß GPC in einem Bereich von 500 bis 12000 g/mol aufweist und in einer Gesamtmenge in einem Bereich von 1 bis 35 phr vorliegt.

Eigene Untersuchungen haben gezeigt, dass die vorstehend genannte Kombination, insbesondere aus (b), (c) und (e) eine signifikante Verbesserung der Robustheit und Reifenbeständigkeit bewirkt. Dies äußert sich insbesondere durch ein deutlich verbessertes Cut & Chip-Verhalten über die Lebensdauer des Reifens (siehe Beispiele unten im Text).

Zudem wurde festgestellt, dass sowohl das Nassbremsverhalten als auch gleichzeitig der Rollwiderstand verbessert werden konnten. Beide Verbesserungen schließen sich für gewöhnlich aus, da sie einem typischen Zielkonflikt unterliegen.

Im Folgenden werden die Bestandteile der erfindungsgemäßen schwefelvernetzbaren Kautschukmischung näher beschrieben. Das nachfolgend Gesagte gilt vorzugsweise *mutatis mutandis* auch für den erfindungsgemäßen Laufstreifen sowie den erfindungsgemäßen Fahrzeugreifen, wie nachfolgend weiter als bevorzugt definiert.

Die im Kontext der vorliegenden Erfindung verwendete Angabe phr (parts per hundred parts of rubber by weight) ist dabei die in der Kautschukindustrie übliche Mengenangabe für Mischungsrezepturen. Die Dosierung der Gewichtsteile der einzelnen Bestandteile wird in dieser Schrift auf 100 Gewichtsteile der gesamten Masse aller in der Mischung vorhandenen hochmolekularen und dadurch festen Kautschuke bezogen. Das erfindungsgemäß enthaltene Dienpolymer (Bestandteil (e)), besonders bevorzugt umfassend Polybutadien, mit einem Mw von 500 bis 12000 g/mol geht daher nicht als Kautschuk in die hundert Teile der phr-Berechnung ein.

Die im Kontext der vorliegende Erfindung verwendete Angabe phf (parts per hundred parts of filler by weight) ist dabei die in der Kautschukindustrie gebräuchliche Mengenangabe für Kupplungsagenzien für die Zusammenwirkung mit Füllstoffen. Im Rahmen der vorliegenden Anmeldung bezieht sich phf auf die als Bestandteil (c) vorliegende Kieselsäure, das heißt, dass andere eventuell vorhandene Füllstoffe wie Ruß nicht in die Berechnung der Silanmenge mit eingehen.

Das im Kontext der vorliegenden Erfindung genannte gewichtsmittlere Molekulargewicht Mw des flüssigen Dienpolymers (sowie aller weiteren Polymere bzw. Kautschuke) als auch das zahlenmittlere Molekulargewicht (sofern darauf Bezug genommen wird) wird mittels Gelpermeationschromatographie bestimmt (GPC mit Tetrahydrofuran (THF) als Elutionsmittel bei 40 °C, Apparat PPS, kalibriert mit Polystyrol-Standard; Größenausschlußchromatographie; engl. SEC = size exclusion chromatography in Anlehnung an BS ISO 11344:2004).

Die Schwefelvernetzbare Kautschukmischung wird nun nachfolgend im Detail beschrieben:
Grundsätzlich handelt es sich vorzugsweise bei der erfindungsgemäßen schwefelvernetzbaren Kautschukmischung um eine Mischung, die im Wesentlichen frei ist von Harzen. Mit anderen Worten, der erfindungsgemäßen Kautschukmischung werden keine beabsichtigten Harze zugesetzt. Besonders bevorzugt ist eine erfindungsgemäße Kautschukmischung, wobei diese kein Harz umfasst. Sofern Harze als unvermeidbare Verunreinigungen eingetragen werden, sind diese grundsätzlich tolerierbar, wenn auch nicht erwünscht. Vorzugsweise beträgt die Gesamtmenge solcher Harze in der erfindungsgemäßen Kautschukmischung 0 bis 1 phr, vorzugsweise 0 bis 0,5 phr, besonders bevorzugt 0 bis 0,1 phr.

Weiterhin ist es bevorzugt, dass die erfindungsgemäße Kautschukmischung arm an Ölen ist, vorzugsweise gar keine gezielt bzw. beabsichtigt zugesetzten Öle umfasst. Öle, die ggf. als unvermeidbare Verunreinigungen bzw. stoffliche Begleitung (z.B. in Kombination mit Schwefel) eingetragen werden, sind jedoch grundsätzlich tolerierbar und führen im Kontext der vorliegenden Erfindung zu einer Kautschukmischung, die arm an Ölen ist. Vorzugsweise beträgt die Gesamtmenge an Ölen in der erfindungsgemäßen Kautschukmischung 0 bis 3 phr, vorzugsweise 0 bis 2 phr, weiter bevorzugt 0 bis 1 phr, besonders bevorzugt 0 bis 0,5 phr, ganz besonders bevorzugt 0 bis 0,1 phr.

Bevorzugt ist daher eine erfindungsgemäße Kautschukmischung, die frei von ölverstreckten Kautschuken ist.

Dementsprechend umfasst die erfindungsgemäße Kautschukmischung vorzugsweise weder mineralische noch nicht-mineralische, gezielt zugesetzte Öle.

Somit ist der Gehalt an Weichmachern, die kein Bestandteil gemäß (e) sind vorzugsweise gering, besonders bevorzugt ist der Bestandteil (e) der einzige Weichmacher in der erfindungsgemäßen Kautschukmischung. Im Sinne des vorstehend Genannten bedeutet dies, dass der Bestandteil (e) vorzugsweise der einzige bewusst und gezielt zugesetzte Weichmacher ist.

Die schwefelvernetzbare Kautschukmischung umfasst (a) mindestens einen Polyisopren-Kautschuk in einer Gesamtmenge von 51 bis 95 phr und bildet somit den überwiegenden Teil der Kautschuke in der Kautschukmischung. Die erfindungsgemäße Kautschukmischung ist somit in ihrer Basis eine auf Polyisopren beruhende Kautschukmischung, vorzugsweise wie nachfolgend als bevorzugt beschrieben. Sie ist besonders bevorzugt für LKW bzw. Schwerlastreifen geeignet.

Bevorzugt ist eine erfindungsgemäße Kautschukmischung, wobei der mindesten eine Polyisopren-Kautschuk gemäß (a) mindestens einen natürlichen Polyisopren-Kautschuk (auch bekannt als Naturkautschuk oder natürlicher Kautschuk (NR)) und/oder mindestens einen synthetischen Polyisopren-Kautschuk (IR) umfasst, vorzugsweise mindestens einen Naturkautschuk (NR). Vorzugsweise umfasst der mindestens eine Polyisopren-Kautschuk gemäß (a) ausschließlich einen oder mehr als einen Naturkautschuk (NR), besonders bevorzugt wie nachfolgend als bevorzugt beschrieben.

Vorzugsweise umfasst der mindestens eine Polyisopren-Kautschuk gemäß (a) mindestens einen cis-1,4-Polyisopren-Kautschuk und/oder mindestens einen 3,4-Polyisopren-Kautschuk. Dies gilt vorzugsweise unabhängig davon, ob es sich um einen natürlichen oder synthetischen Polyisopren-Kautschuk handelt. Bevorzugt ist mindestens ein cis-1,4-Polyisopren-Kautschuk mit besonders bevorzugt einem cis-1,4 Anteil größer 90 Gew.-%. Solch ein Polyisopren-Kautschuk wird vorzugsweise durch stereospezifische Polymerisation in Lösung mit Ziegler-Natta-Katalysatoren oder unter Verwendung von fein verteiltem Lithiumalkylen erhalten. Weiterhin handelt es sich typischerweise auch bei Naturkautschuk (NR) um einen solchen cis-1,4 Polyisopren-Kautschuk. Besonders bevorzugt ist daher mindestens ein Naturkautschuk (NR) umfassend mindestens einen cis-1,4-Polyisopren-Kautschuk, vorzugsweise mit einem cis-1,4-Anteil größer oder gleich 99 Gew.-%.

Bevorzugt ist eine erfindungsgemäße Kautschukmischung, wobei der mindesten eine Polyisopren-Kautschuk gemäß (a) in einer Gesamtmenge von 60 bis 92 phr vorliegt, vorzugsweise von 67 bis 90 phr, am bevorzugtesten von 73 bis 85 phr. In diesen Mengenbereichen liegen der Kautschukmischung zunehmend verbesserte Reißeigenschaften zugrunde.

Der mindestens eine Polyisopren-Kautschuk gemäß (a) weist vorzugsweise ein gewichtsmittleres Molekulargewicht Mw gemäß GPC in einem Bereich von 250 000 bis 5 000 000 g/mol auf. Es gehört somit zu den hochmolekularen Kautschuken, die in die Hundert Teile bei der Berechnung der phr-Bezugsgröße eingehen.

Die erfindungsgemäße schwefelvernetzbare Kautschukmischung umfasst zudem (b) mindestens einen Styrol-Butadien-Kautschuk in einer Gesamtmenge von 5 bis 49 phr. Es handelt sich hierbei um einen sogenannten SBR welcher mengenmäßig die zweitgrößte Kautschukspezies in der Gesamtmischung bildet.

Vorzugsweise umfasst der mindestes eine Styrol-Butadien-Kautschuk gemäß (b) mindestens einen lösungspolymerisierten Styrol-Butadien-Kautschuk (SSBR) und/oder (vorzugsweise oder) mindestens einen emulsionspolymerisierten Styrol-Butadien-Kautschuk (ESBR); vorzugsweise mindestens einen lösungspolymerisierten Styrol-Butadien-Kautschuk (SSBR); besonders bevorzugt ausschließlich einen oder mehr als einen lösungspolymerisierten Styrol-Butadien-Kautschuk (SSBR). Die Begriffe "Styrol-Butadien-Kautschuk" und "Styrol-Butadien-Copolymer" sind im Kontext der vorliegenden Erfindung bedeutungsgleich.

Besonders bevorzugt weist der mindestens eine Styrol-Butadien-Kautschuk gemäß (b) ein gewichtsmittleres Molekulargewicht Mw gemäß GPC in einem Bereich von 250 000 bis 600 000 g/mol auf. Auch dieser Kautschuk wird bei der Berechnung der phr-Mengen berücksichtigt.

Bevorzugt ist eine erfindungsgemäße Kautschukmischung, wobei der mindestens eine Styrol-Butadien-Kautschuk gemäß (b) in einer Gesamtmenge von 8 bis 40 phr vorliegt, vorzugsweise von 10 bis 33 phr, am bevorzugtesten von 15 bis 27 phr.

Der im Kontext der vorliegenden Erfindung vorhandene mindestens eine Styrol-Butadien-Kautschuk gemäß (b) weist eine Glasübergangstemperatur Tg gemäß DSC in einem Bereich von -45 bis -5°C auf. Es handelt sich bei diesen Bereichsangaben somit um die individuellen Glasübergangstemperaturen des mindestens einen Styrol-Butadien-Kautschuks des mindestens einen Styrol-Butadien-Kautschuks gemäß (b). Sofern mehr als ein Styrol-Butadien-Kautschuk vorliegt, beispielsweise eine Kombination mit einem Styrol-Butadien-Kautschuk mit einer Glasübergangstemperatur außerhalb des Bereichs von -45°C bis - 5°C, handelt sich nicht um eine mittlere oder durchschnittliche Glasüberganstemperatur. Eine solche mittlere bzw. durchschnittliche Glasübergangtemperatur ergibt sich jedoch zwangsläufig aus dem Mittel der individuellen Glasübergangstemperaturen. Dem Fachmann ist selbstverständlich bekannt, wie eine mittlere bzw. durchschnittliche Glasüberganstemperatur mehrerer Styrol-Butadien-Kautschuke bestimmt wird. Besonders bevorzugt umfasst der mindestens eine Styrol-Butadien-Kautschuk gemäß (b) insgesamt zwei zur chemischen Interaktion mit Kieselsäure geeignete Styrol-Butadien-Kautschuke (SBR), wobei nur einer eine Glasübergangstemperatur Tg im Bereich von -45°C bis -5°C aufweist.

Im Kontext der vorliegenden Erfindung wird die Glasübergangstemperatur Tg mittels DSC, vorzugsweise gemäß ISO 22768 (2020 E) bestimmt, sofern nicht bereits der Hersteller kommerziell erhältlicher Styrol-Butadien-Kautschuke eine Glasübergangstemperatur angibt.

Bevorzugt ist eine erfindungsgemäße Kautschukmischung, wobei der mindestens eine Styrol-Butadien-Kautschuk eine Glasübergangstemperatur Tg im Bereich von -40 bis -8°C aufweist, vorzugsweise von -36 bis -11°C, weiter bevorzugt von -32 bis -14°C, am bevorzugtesten von -28 bis -17°C.

Der im Kontext der vorliegenden Erfindung vorhandene mindestens einen Styrol-Butadien-Kautschuk gemäß (b) ist organosilizium-modifiziert, vorzugsweise mindestens entlang der Polymerkette und/oder mindestens endständig organisilizium-modifiziert. Besonders bevorzugt ist eine erfindungsgemäße Kautschukmischung, wobei der mindestens eine Styrol-Butadien-Kautschuk gemäß (b) mindestens endständig organosilizium-modifiziert ist, am bevorzugtesten ausschließlich endständig organosilizium-modifiziert ist hinsichtlich seiner Funktionalisierung.

Vorzugsweise handelt es sich bei der Organosilizium-Modifizierung um eine oder mehr als eine SiOR-Funktion, wobei R unabhängig voneinander für Wasserstoff oder einen organischen Rest steht, vorzugsweise einen organischen Rest. Zudem ist die eine oder mehr als eine SiOR-Funktion entweder direkt mit dem mindestens einen Styrol-Butadien-Kautschuk gemäß (b) verbunden oder über einen spacer gekoppelt, wobei der spacer vorzugsweise organisch ist. Vorzugsweise umfasst der organische Rest R unabhängig voneinander einen Alkylrest, Heteroalkylrest und/oder Cycloalkylrest. Vorzugsweise umfasst der organische Rest R 1 bis 12 Kohlenstoffatome, vorzugsweise 1 bis 8 Kohlenstoffatome, weiter bevorzugt 1 bis 6 Kohlenstoffatome, insbesondere bevorzugt 1 bis 4 Kohlenstoffatome. Ein bevorzugter Alkylrest und Cycloalkylrest umfasst einen C1 bis C12 Alkylrest bzw. C3 bis C12 Cycloalkylrest, besonders bevorzugt einen C1 bis C6 Alkylrest bzw. C3 bis C6 Cycloalkylrest. Ganz besonders bevorzugt umfasst R einen C1 bis C3 Alkylrest, insbesondere vorzugsweise Methyl und/oder Ethyl.

Sofern die SiOR-Funktion über einen spacer gekoppelt ist, ist oder umfasst der spacer vorzugsweise einen Alkylen-Rest, vorzugsweise einen C3 bis C12 Alkylenrest.

Die vorstehend beschriebene Organosilizium-Modifizierung als Funktionalisierung des mindestens einen Styrol-Butadien-Kautschuks ist vorzugsweise nicht die einzige Funktionalisierung. Bevorzugt ist eine erfindungsgemäße Kautschukmischung, wobei der mindestens eine Styrol-Butadien-Kautschuk gemäß (b) nicht nur organosilizum-modifiziert ist, sondern zusätzlich modifiziert ist, d.h. mittels einer von der Organosilizium-Modifizierung verschiedenen Modifizierung. Diese zusätzliche Modifizierung ist vorzugsweise ausgewählt aus der Gruppe funktioneller Gruppen bestehend aus Hydroxy, Epoxy und Mercapto.

Besonders bevorzugt bewirkt die Organosilizium-Modifizierung und optional auch die zusätzliche Modifizierung eine chemische Interaktion mit der mindestens einen Kieselsäure gemäß Bestandteil (c) der erfindungsgemäßen Kautschukmischung.

Die erfindungsgemäße schwefelvernetzbare Kautschukmischung umfasst zudem (c) mindestens eine Kieselsäure mit einer BET-Oberfläche in einem Bereich von 225 bis 400 m²/g in einer Gesamtmenge von 30 bis 95 phr.

Im Kontext der vorliegenden Erfindung sind die Begriffe "Kieselsäure" und "Silica" bedeutungsgleich.

Bevorzugt ist eine erfindungsgemäße Kautschukmischung, wobei die Kieselsäure gemäß (c) in einer Gesamtmenge von 33 bis 90 phr vorliegt, vorzugsweise von 36 bis 85 phr, weiter bevorzugt von 39 bis 80 phr, besonders bevorzugt von 42 bis 75, am bevorzugtesten von 45 bis 70 phr.

Bevorzugt ist eine erfindungsgemäße Kautschukmischung, wobei die Kieselsäure gemäß (c) eine BET-Oberfläche im Bereich von 230 bis 380 m²/g aufweist, vorzugsweise von 230 bis 360 m²/g, weiter bevorzugt von 235 bis 340 m²/g, besonders bevorzugt von 240 bis 310 m²/g, am bevorzugtesten von 255 bis 295 m²/g.

Eine vergleichsweise hohe BET-Oberfläche ist erfindungswesentlich im Kontext der vorliegenden Erfindung. Vorzugsweise handelt es sich um mindestens eine fein verteile, gefällte (sogenannte "precipitated") Kieselsäure. Eigene Untersuchungen haben gezeigt, dass solche Kieselsäuren eine deutlich bessere Verteilung innerhalb der erfindungsgemäßen Kautschukmischung erzielen. Dies wirkt sich sehr positiv auf die Steifigkeit und den Abrieb der Gesamtmischung und insbesondere auf eine mittels Schwefel vernetzte Kautschukmischung aus, ohne dabei gleichzeitig signifikant an Qualität hinsichtlich der Reißeigenschaften und des Nassbremsens einzubüßen. Diese verbesserte Ausgewogenheit wird erkennbar, wenn die mindestens eine Kieselsäure gemäß (c) in einer Gesamtmenge in einem Bereich von 30 bis 95 phr vorliegt; wird aber weiter verbessert, wenn die Gesamtmenge in den zuvor genannten bevorzugten Mengenbereichen liegt.

Ganz grundsätzlich umfasst die erfindungsgemäße Kautschukmischung gemäß (d) mindestens ein Silan in einer Gesamtmenge von 1 bis 20 phf. Die erfindungsgemäße schwefelvernetzbare Kautschukmischung umfasst insbesondere (d) mindestens ein Silan in einer Gesamtmenge von 1 bis 20 phf ausgewählt aus der Gruppe bestehend aus geblockten Mercaptosilanen, ungeblockten Mercaptosilanen und polysulfidischen Silanen. Im Kontext der vorliegenden Erfindung schließt der Begriff "polysulfidisch" bereits S2 Silane, d.h. Disulfide bzw. disulfidische Silane, mit ein.

Bevorzugt ist eine erfindungsgemäße Kautschukmischung, wobei das mindestens eine Silan gemäß (d) in einer Gesamtmenge von 5 bis 17 phf vorliegt, vorzugsweise von 7 bis 14 phr.

Bevorzugt umfassen die polysulfidischen Silane S2, S3, S4, S5, S6 und/oder S8 Silane. Besonders bevorzugt umfassen die polysulfidischen Silane 3,3'-Bis(triethoxysilylpropyl)disulfid (TESPD) und/oder 3,3'-Bis(triethoxysilylpropyl)tetrasulfid (TESPT). In einigen Fällen ist eine erfindungsgemäße Kautschukmischung bevorzugt, wobei diese entweder keine polysulfidischen Silane enthält oder ein oder mehr als ein polysulfidisches Silan in Kombination mit einem geblockten und/oder ungeblockten Mercaptosilan.

Vorzugsweise umfasst die erfindungsgemäße Kautschukmischung keine Alkyltriethoxy-Silane (z.B. Octyltriethoxysilan, z.B. erhältlich unter dem Handelsnamen "Si208" von der Firma Evonik). Diese sind typischerweise nicht zur chemischen Interaktion mit einem Polymer bzw. Kautschuk fähig, da sie keinen Schwefel aufweisen. Besonders bevorzugt umfasst die erfindungsgemäße Kautschukmischung daher keine Schwefel-freien Silane. Vorzugsweise umfasst die erfindungsgemäße Kautschukmischung ein oder mehr als ein Schwefel-freies Silan (sofern eines enthalten sein soll) in Kombination mit mindestens einem Schwefel-haltigen Silan, vorzugsweise in Kombination mit mindestens einem Silan, wie für (d) definiert, besonders bevorzugt in Kombination mit einem geblockten und/oder ungeblockten Mercaptosilan.

Besonders bevorzugt ist eine erfindungsgemäße Kautschukmischung, wobei das mindestens eine Silan gemäß (d) ausgewählt ist aus der Gruppe bestehend aus geblockten Mercaptosilanen und ungeblockten Mercaptosilanen, vorzugsweise geblockten Mercaptosilanen.

Unter ungeblockten Mercaptosilanen sind Silane zu verstehen, die eine -S-H-Gruppe aufweisen, also ein Wasserstoffatom direkt am Schwefelatom. Unter geblockte Mercaptosilane sind Silane zu verstehen, die eine S-SG-Gruppe aufweisen, wobei "SG" die Abkürzung für eine Schutzgruppe am Schwefelatom "S" ist. Zu den bevorzugten Schutzgruppen gehören beispielsweise Acylgruppen.

Der Ausdruck "ausgewählt aus der Gruppe bestehend aus geblockten Mercaptosilanen und ungeblockten Mercaptosilanen" schließt unter anderem ein, dass entweder nur geblockte oder nur ungeblockte oder ein Gemisch (jeweils einzelner oder mehrerer) aus geblocktem und ungeblocktem Silan in der erfindungsgemäßen Kautschukmischung vorliegt.

Dem Fachmann ist selbstverständlich klar, dass sich diese Namensgebung auf den Anfangszustand der Bestandteile der erfindungsgemäßen schwefelvernetzbaren Kautschukmischung bezieht, jedoch während des Mischvorgangs und/oder der Vulkanisation die Schutzgruppen abgespalten werden und die jeweiligen Schwefelatome anschließend chemisch reagieren.

Bevorzugt ist eine erfindungsgemäße Kautschukmischung, wobei die geblockten bzw. die ungeblockten (vorzugsweise die geblockten) Mercaptosilane entweder ein einzelnes Schwefelatom aufweisen oder zwei oder mehr als zwei Schwefelatome aufweisen. Im Fall von zwei oder mehr als zwei Schwefelatomen sind die Schwefelatome nicht unmittelbar benachbart, sondern durch spacer-Gruppen (vorzugsweise Alkylengruppen) voneinander getrennt.

Ein bevorzugtes geblocktes Mercaptosilan mit einem einzelnen Schwefelatom umfasst, vorzugsweise ist, 3-Octanoylthio-1-propyltriethoxysilan mit der Formel V) (EtO)₃Si-(CH₂)₃-S-C(=O)-(CH₂)₆-CH₃, beispielsweise erhältlich als Handelsprodukt mit dem Namen NXT-Silan von der Firma Momentive.

Bevorzugt ist eine erfindungsgemäße Kautschukmischung, wobei das geblockte bzw. das ungeblockte Mercaptosilan die allgemeine Summenformel IV) aufweist:

(R⁴)₃Si-(Z-S)ᵣ-R⁵ IV),

wobei
R⁴ unabhängig voneinander Alkoxy-Gruppen mit 1 bis 10 Kohlenstoffatomen bedeutet;
R⁵ eine Acylgruppe mit 1 bis 20 Kohlenstoffatomen (führt zu einem geblockten Mercaptosilan) oder ein Wasserstoffatom (führt zu einem ungeblockten Mercaptosilan) bedeutet, vorzugsweise eine Acetylgruppe;
Z unabhängig von anderen Z in der Summenformel IV) eine Alkylengruppe mit 1 bis 10 Kohlenstoffatomen bedeutet, vorzugsweise mit 2 bis 8 Kohlenstoffatomen, besonders bevorzugt mit 3 bis 6 Kohlenstoffatomen; und
r eine ganze Zahl aus dem Bereich von 1 bis 5 bedeutet, vorzugsweise 2 bis 3, besonders bevorzugt bedeutet r 2.
S ist die Abkürzung für Schwefel und Si für Silizium.

Geblockte Mercaptosilane tragen an dem Schwefelatom eine Schutzgruppe, in dem vorliegenden Fall in Formel IV) die Gruppe R⁵, wodurch sie auch "geschützte Mercaptosilane" genannt werden.

Ein bevorzugtes geblocktes Mercaptosilan mit zwei Schwefelatomen umfasst, vorzugsweise ist, ein Silan der Formel IV-a)

(R⁴)₃Si-(Z1-S)-(Z2-S)-R⁵ IV-a),

wobei
R⁴ unabhängig voneinander Alkoxy-Gruppen mit 1 bis 3 Kohlenstoffatomen bedeutet, vorzugsweise Ethoxy, besonders bevorzugt alle Ethoxy;
R⁵ eine Acylgruppe mit 1 bis 10 Kohlenstoffatomen bedeutet, vorzugsweise eine Acetylgruppe;
Z1 eine Alkylengruppe mit 2 bis 6 Kohlenstoffatomen bedeutet, vorzugsweise mit 2 bis 5 Kohlenstoffatomen, besonders bevorzugt mit 3 bis 4 Kohlenstoffatomen; und
Z2 eine Alkylengruppe mit 2 bis 8 Kohlenstoffatomen bedeutet, vorzugsweise mit 3 bis 7 Kohlenstoffatomen, besonders bevorzugt mit 4 bis 6 Kohlenstoffatomen.

Besonders bevorzugt umfasst die Verbindung der Formel IV-a) eine Verbindung der Formel IV-b) (chemischer Name: 4-7-acetyl-7-thiaheptyl-4-thiabutyl-triethoxysilan)

(EtO)₃Si-(CH₂)₃-S-(CH₂)₆-S-C(=O)-CH₃ IV-b).

Es ist besonders bevorzugt, dass die erfindungsgemäße Kautschukmischung mindestens ein geblocktes Mercaptosilan umfasst, vorzugsweise der Formel IV-a und/oder der Formel V), besonders bevorzugt der Formel IV-b und/oder der Formel V). Besonders bevorzugt ist, dass dies die einzigen Mercaptosilane in der erfindungsgemäßen Kautschukmischung sind, besonders bevorzugt die einzigen Silanverbindungen überhaupt.

Die erfindungsgemäße schwefelvernetzbare Kautschukmischung umfasst zudem (e) mindestens ein flüssiges Dienpolymer, welches organosilizium-modifiziert ist, und ein gewichtsmittleres Molekulargewicht Mw gemäß GPC in einem Bereich von 500 bis 12000 g/mol aufweist und in einer Gesamtmenge in einem Bereich von 1 bis 35 phr vorliegt.

Im Kontext der vorliegenden Erfindung bedeutet der hier angegebene gewichtsmittlere Molekulargewichtsbereich Mw, dass es sich bei Raumtemperatur um ein flüssiges Dienpolymer handelt. Der Einfachheit halber wird deshalb im Rahmen der vorliegenden Erfindung auch der kurze Ausdruck "flüssiges Dienpolymer" verwendet. Die Angabe des Mw bezieht sich hierbei auf das Dienpolymer inklusive der Organosilizium-Modifizierung.

Dienpolymere sind typischerweise durch Polymerisation oder Copolymerisation von Dienen und/oder Cycloalkenen hergestellte Polymere, welche entweder in der Hauptkette oder in den Seitengruppen C=C-Doppelbindungen aufweisen.

Flüssige Polymere erlauben typischerweise eine hervorragende Verarbeitbarkeit aufgrund der vergleichsweise niedrigen Viskosität. Im Kontext der vorliegenden Erfindung wirkt das mindestens eine Dienpolymer gemäß (e) vorzugsweise als Weichmacher.

Bevorzugt ist eine erfindungsgemäße Kautschukmischung, wobei das mindesten eine flüssige Dienpolymer gemäß (e) ein gewichtsmittleres Molekulargewicht Mw gemäß GPC in einem Bereich von 1000 bis 11000 g/mol aufweist, vorzugsweise von 2000 bis 10000 g/mol, besonders bevorzugt von 4000 bis 9000 g/mol.

Bevorzugt ist eine erfindungsgemäße Kautschukmischung, wobei das mindesten eine flüssige Dienpolymer gemäß (e) in einer Gesamtmenge im Bereich von 1,5 bis 30 phr vorliegt, vorzugsweise von 2 bis 25 phr, weiter bevorzugt von 2,5 bis 20 phr, am bevorzugtesten von 3 bis 15 phr.

Besonders bevorzugt ist eine erfindungsgemäße Kautschukmischung, wobei das mindestens eine flüssige Dienpolymer gemäß (e) mindestens endständig organosilizium-modifiziert ist, vorzugsweise ausschließlich mindestens endständig organosilizium-modifiziert ist bezogen auf seine Modifizierungen.

Hinsichtlich der Glasübergangstemperatur ist das mindestens eine organosilizium-modifizierte, flüssige Dienpolymer gemäß (e) nicht notwendigerweise eingeschränkt. Besonders bevorzugt ist eine erfindungsgemäße Kautschukmischung, wobei das mindestens eine organosilizium-modifizierte, flüssige Dienpolymer gemäß (e) eine Glasübergangstemperatur Tg gemäß DSC (Apparat Mettler Toledo; Messung von +70 °C bis -150 °C, Temperaturänderung von 10 K/min) in einem Bereich von -85 bis -30 °C aufweist, vorzugsweise von -75 bis -40 °C, besonders bevorzugt von -65 bis -45 °C.

Besonders bevorzugt ist eine erfindungsgemäße Kautschukmischung, wobei das mindestens eine organosilizium-modifizierte, flüssige Dienpolymer gemäß (e) mit zumindest einem Rest gemäß Formel I)

I) (R1R2R3)Si-

modifiziert ist, wobei
- R1, R2, R3 unabhängig voneinander ausgewählt sind aus linearen oder verzweigten Alkoxy-, Cycloalkoxy,- Alkyl-, Cycloalkyl- oder Arylgruppen, jeweils umfassend 1 bis 20 Kohlenstoffatome; und
- der Rest gemäß Formel I) direkt oder über eine Brücke an die Polymerkette des Dienpolymers angebunden ist, wobei die Brücke auf einem divalenten, gesättigten oder ungesättigten Kohlenwasserstoff basiert, optional enthaltend cyclische, aliphatische und/oder aromatische Gruppen sowie optional in oder an dem Kohlenwasserstoff Heteroatome

Eigene Untersuchungen legen nahe, dass eine derartige Modifizierung sehr positive Auswirkungen auf den Rollwiderstand hat. Zudem zeigt es in Zusammenwirkung mit einem organosilizium-modifizierten Styrol-Butadien-Kautschuk wie im Kontext der vorliegenden Erfindung definiert, überraschende Verbesserungen mit Blick auf die Beständigkeit von Reifenbauteilen (siehe Beispiele am Ende des Textes).

Vorzugsweise handelt es sich bei R1, R2, R3 um Alkoxygruppen. Besonders bevorzugt ist wenigstens eine der drei Gruppen R1, R2, R3 eine Ethoxygruppe. Ganz besonders bevorzugt handelt es sich bei allen drei Gruppen R1, R2, R3 um jeweils eine Ethoxygruppe (abgekürzt mit OEt). Dies gilt vorzugsweise für alle genannten Ausführungsformen der Erfindung inkl. der nachfolgend genannten Formeln II) und III).

In einigen Fällen ist eine erfindungsgemäße schwefelvernetzbare Kautschukmischung bevorzugt, wobei der Rest gemäß Formel I) nicht direkt, sondern über die Brücke Y-X angebunden ist, so dass sich Formel II) ergibt:

II) (R1R2R3)Si-Y-X-,

wobei
R1R2R3 die Bedeutung wie in Formel I) hat;
Y die Bedeutung von -(CH₂)ₙ- hat und n eine ganze Zahl aus dem Bereich von 1 bis 8 ist (d.h. ein Alkylenrest bedeutet), vorzugsweise n eine ganze Zahl im Bereich von 2 bis 4 ist; und
X eine funktionelle Gruppe ist, die ausgewählt ist aus der Gruppe bestehend aus Ester, Ether, Urethan, Harnstoff, Amin, Amid, Thioether und Thioester.

Im Kontext der vorliegenden Erfindung bedeutet Urethan eine -N(H)-C(O)-O- Gruppe, die vorzugsweise mit dem Stickstoff "N" an das "Y" bindet.

Besonders bevorzugt ist eine erfindungsgemäße Kautschukmischung, wobei das mindestens eine organosilizium-modifizierte, flüssige Dienpolymer gemäß (e) mit einem Rest gemäß Formel II) modifiziert ist, wobei in Y n = 3 ist (d.h. einen divalenten Propylen-Rest bedeutet) und X Urethan (-N(H)-C(O)-O-) ist und die Reste R1, R2 und R3 alle eine Ethoxygruppe (OEt) sind.

Ganz besonders bevorzugt ist eine erfindungsgemäße Kautschukmischung, wobei das mindestens eine organosilizium-modifizierte, flüssige Dienpolymer gemäß (e) ein Polybutadien (abgekürzt PB) umfasst und vorzugsweise eine Gesamtstruktur gemäß Formel III) aufweist:

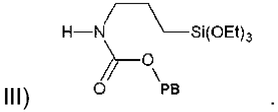

Vorzugsweise umfasst das mindestens eine organosilizium-modifizierte, flüssige Dienpolymer gemäß (e) ausschließlich ein oder mehr als ein organosilizium-modifiziertes, flüssiges Polybutadien. Hierbei bedeutet PB "Polybutadien". Besonders bevorzugt gilt alles allgemein für das organosilizium-modifizierte, flüssige Dienpolymer Gesagte *mutatis mutandis* für das besonders bevorzugte Polybutadien.

Besonders bevorzugt ist eine erfindungsgemäße Kautschukmischung, wobei das mindestens eine organosilizium-modifizierte, flüssige Dienpolymer gemäß (e) einen Vinyl-Gehalt (Gehalt an 1,2-gebundenem Butadien, bezogen auf die Monomere der Polymerkette des Dienpolymers) von 40 bis 75 % aufweist, besonders bevorzugt von 50 bis 75 %, ganz besonders bevorzugt von 55 bis 70 %.

Besonders bevorzugt ist eine erfindungsgemäße Kautschukmischung, wobei das mindestens eine organosilizium-modifizierte, flüssige Dienpolymer gemäß (e) einen 1,4-trans-Anteil von 5 bis 30 % (bezogen auf die Monomere der Polymerkette des Polybutadiens) aufweist, besonders bevorzugt von 10 bis 25 %.

Besonders bevorzugt ist eine erfindungsgemäße Kautschukmischung, wobei das mindestens eine organosilizium-modifizierte, flüssige Dienpolymer gemäß (e) einen cis-Anteil in einem Bereich von 5 bis 30 % (bezogen auf die Monomere der Polymerkette des Polybutadiens), besonders bevorzugt von 10 bis 25 %.

Die Merkmale der Mikrostruktur wie 1,4-trans-Anteil, Vinyl-Gehalt, cis-Anteil werden nach erfolgter Synthese des flüssigen Polybutadiens typischerweise mittels ¹³C-NMR (90,5628 MHz; Relaxationsagens Cr(acac)₃; Lösungsmittel CDCl₃, Bruker 360 MHz) bestimmt.

Das mindestens eine organosilizium-modifizierte, flüssige Dienpolymer gemäß (e), insbesondere umfassend Polybutadien, wird vorzugsweise durch Reaktion von 3-Isocyanat-n-Propyl-Triethoxysilan mit endständig Hydroxy-funktionalisiertem Polybutadien (z.B. Krasol LBH-P3000) wie in der US 2002/0082333 A1 beschrieben, hergestellt.

Die erfindungsgemäße schwefelvernetzbare Kautschukmischung umfasst vorzugsweise zusätzlich
(f) mindestens einen Ruß, vorzugsweise in einer Gesamtmenge im Bereich von 0.1 bis 25 phr, vorzugsweise von 0,5 bis 20 phr, weiter bevorzugt von 1 bis 15 phr, besonders bevorzugt von 1,5 bis 10 phr, am bevorzugtesten von 2 bis 8 phr.

Grundsätzlich ist die erfindungsgemäße Kautschukmischung hinsichtlich des Rußes nicht spezifisch eingeschränkt. Besonders bevorzugt ist eine erfindungsgemäße Kautschukmischung, wobei der mindestens einen Ruß gemäß (f) eine Jodadsorptionszahl gemäß ASTM D 1510 in einem Bereich von 30 bis 180 g/kg aufweist, bevorzugt von 30 bis 130 kg/g, und/oder eine DBP-Zahl gemäß ASTM D 2414 in einem Bereich von 80 bis 200 ml/100 g, bevorzugt von 100 bis 200 ml/100g, besonders bevorzugt von 100 bis 180 ml/100g.

Typischerweise werden hierdurch für die Anwendung im Fahrzeugreifen besonders gute Rollwiderstandsindikatoren (Rückprallelastizität bei 70 °C) bei guten sonstigen Reifeneigenschaften erzielt.

In einigen Fällen ist eine erfindungsgemäße Kautschukmischung bevorzugt, wobei die Kautschukmischung zusätzlich zu den Bestandteilen (c) und optional (f) einen oder mehr als einen weiteren polaren und/oder unpolaren Füllstoff umfasst, vorzugsweise ausgewählt aus der Gruppe bestehend aus Alumosilicate, Kreide, Stärke, Magnesiumoxid, Titandioxid und Kautschukgele.

Zinkoxid gehört im Rahmen der vorliegenden Erfindung nicht zu den Füllstoffen.

Die Vulkanisation bzw. das Vulkanisieren (auch Vernetzen bzw. Schwefelvernetzung genannt) der erfindungsgemäßen Kautschukmischung erfolgt bevorzugt in Anwesenheit von Schwefel und/oder Schwefelspendern, vorzugsweise unter Mitwirkung von Vulkanisationsbeschleunigern, wobei vorzugsweise einige Vulkanisationsbeschleuniger zugleich Schwefelspender sind. Der zugesetzte bzw. freigesetzte Schwefel wird dabei üblicherweise durch Komplexbildung für die Vulkanisation aktiviert. Im Kontext der vorliegenden Erfindung sind die Begriffe Schwefelspender, schwefelspendende Verbindung und Schwefeldonor bedeutungsgleich.

Die erfindungsgemäße schwefelvernetzbare Kautschukmischung umfasst daher vorzugsweise zusätzlich
(g) Schwefel und/oder mindestens einen Schwefeldonor, wobei der Schwefeldonor vorzugsweise ausgewählt ist aus der Gruppe bestehend aus Thiuramdisulfiden und Thiophosphaten, und/oder (vorzugsweise und)
(h) mindestens einen (d.h. einen, zwei, drei oder mehr als drei) Vulkanisationsbeschleuniger (vorzugsweise zusätzlich oder alternativ zu (g), besonders bevorzugt zusätzlich), vorzugsweise einen (oder mehr als einen) Sulfenamidbeschleuniger.

Wie bereits ausgeführt, in einigen bevorzugten Fällen erfüllt der Bestandteil (h) vorzugsweise auch die Funktion des Bestandteils (g). Das führt vorzugsweise dazu, dass die erfindungsgemäße Kautschukmischung keinen klassischen Schwefel und/oder keinen klassischen Schwefeldonor umfasst.

Besonders bevorzugt ist eine erfindungsgemäße schwefelvernetzbare Kautschukmischung, wobei der Schwefel bzw. der mindestens eine Schwefeldonor gemäß (g) in einer Gesamtmenge im Bereich von 0,1 bis 3 phr vorliegt, vorzugsweise von 0,5 bis 1,8 phr, weiter vorzugsweise von 1 bis 1,6 phr.

Hinsichtlich der Schwefelspender gibt es keine besondere Einschränkung, so dass grundsätzlich alle für den Fachmann bekannten Schwefelspender in Betracht kommen, solange sie unter den vorliegenden Bedingungen Schwefel in entsprechender Form zur Verfügung stellen. Als schwefelspendende Substanz können dabei alle dem Fachmann bekannten schwefelspendenden Substanzen verwendet werden. Bevorzugt ist eine erfindungsgemäße Kautschukmischung, wobei der mindestens eine Schwefeldonor ausgewählt ist aus der Gruppe bestehend aus Sulfiden (vorzugsweise Disulfiden und/oder Polysulfiden), Dithioalkanen und Phosphaten (vorzugsweise Thiophosphaten). Besonders bevorzugte Sulfide umfassen Thiuramdisulfide und/oder Thiuramtetrasulfide.

Besonders bevorzugt ist eine erfindungsgemäße Kautschukmischung, wobei der mindestens eine Schwefeldonor ausgewählt ist aus der Gruppe bestehend aus Thiuramdisulfiden, Thiuramtetrasulfiden und Dithiophosphaten.

Ganz besonders bevorzugt ist eine erfindungsgemäße Kautschukmischung, wobei der mindestens eine Schwefeldonor ausgewählt ist aus der Gruppe bestehend aus Tetrabenzylthiuramdisulfid (TBzTD), Tetramethylthiuramdisulfid (TMTD), Tetraethylthiuramdisulfid (TETD), Dipentamethylenthiuramtetrasulfid (DPTT), Bis-(Diisopropyl)thiophosphoryldisulfid (DipDis), Bis(O,O-2-ethylhexyl-thiophosphoryl)polysulfid (z. B. erhältlich als Rhenocure SDT 50^{®}, Rheinchemie GmbH), Zinkdichloryldithiophosphat (z. B. erhältlich als Rhenocure ZDT/S^{®}, Rheinchemie GmbH), Zinkalkyldithiophosphaten, 1,6-Bis(N,N-dibenzylthiocarbamoyldithio)hexan, Diarylpolysulfiden und Dialkylpolysulfiden.

Hinsichtlich der Vulkanisationsbeschleuniger gibt es keine besondere Einschränkung. Bevorzugte Vulkanisationsbeschleuniger umfassen Thiazolbeschleuniger, Mercaptobeschleuniger, Sulfenamidbeschleuniger, Thiocarbamatbeschleuniger, Thiurambeschleuniger, Thiophosphatbeschleuniger, Thioharnstoffbeschleuniger, Xanthogenat-Beschleuniger und/oder Guanidin-Beschleuniger. Besonders bevorzugt ist ein oder mehr als ein Sulfenamidbeschleuniger und/oder ein oder mehr als ein Guanidin-Beschleuniger, ganz besonders einen oder mehr als einen Beschleuniger ausgewählt aus der Gruppe bestehend aus N-Cyclohexyl-2-benzothiazolsufenamid (CBS), N,N-Dicyclohexylbenzothiazol-2-sulfenamid (DCBS), Benzothiazyl-2-sulfenmorpholid (MBS), N-tert-Butyl-2-benzothiazylsulfenamid (TBBS) und Diphenylguanidin (DPG).

Besonders bevorzugt ist eine erfindungsgemäße schwefelvernetzbare Kautschukmischung, wobei der mindestens eine Vulkanisationsbeschleuniger gemäß (h) in einer Gesamtmenge im Bereich von 0,5 bis 4 phr vorliegt, vorzugsweise von 1 bis 3 phr.

Bevorzugt ist eine erfindungsgemäße Kautschukmischung, vorzugsweise wie vorstehend und/oder nachstehend als bevorzugt beschrieben, umfassend einen oder mehr als einen Vulkanisationsverzögerer. Die Anwesenheit eines Vulkanisationsverzögerers trägt beispielsweise zu einem besser ausbalancierten Vulkanisationsverlauf bei.

Bevorzugt ist eine erfindungsgemäße schwefelvernetzbare Kautschukmischung, vorzugsweise wie vorstehend und/oder nachstehend als bevorzugt beschrieben, umfassend einen oder mehr als einen weiteren Zusatzstoff. Hierbei handelt es sich typischerweise um übliche Zusatzstoffe in den typischen Mengen, die bei der Herstellung der Kautschukmischung vorzugsweise in wenigstens eine Grundmischstufe zugegeben werden.

Vorzugsweise umfasst der eine oder mehr als eine weitere Zusatzstoff:
j) Alterungsschutzmittel, die aus dem Stand der Technik bekannt sind, vorzugsweise umfassend *para*-Phenylendiamine und/oder Dihydrochinoline; besonders bevorzugt ausgewählt aus der Gruppe bestehend aus N-Phenyl-N'-(1,3-dimethylbutyl)-p-phenylendiamin (6PPD), N,N'-Diphenyl-p-phenylendiamin (DPPD), N-(1-phenylethyl)-N'-phenyl-p-phenylendiamin (SPPD), N,N'-Ditolyl-p-phenylendiamin (DTPD), N-(1,4-dimethylpentyl)-N'-phenyl-p-phenylendiamin (7PPD), N-Isopropyl-N'-phenyl-p-phenylendiamin (IPPD), und 2,2,4-Trimethyl-1,2-dihydrochinolin (TMQ);
k) einen Aktivator; vorzugsweise umfassend Zinkverbindungen (inklusive Zinkkomplexe) und/oder Fettsäuren; besonders bevorzugt umfassend Zinkoxid, Stearinsäure und/oder Zinkethylhexanoat (deren Kombination unter anderem zur Komplexierung des Schwefels beiträgt);
l) Ozonschutzwachse;
m) Mastikationshilfsmittel; vorzugsweise umfassend 2,2'-Dibenzamidodiphenyldisulfid (DBD);
n) Prozesshilfsmittel; vorzugsweise umfassend Fettsäureester und/oder Metallseifen, wobei bevorzugte Metallseifen Zinkseifen und/oder Calciumseifen umfassen; und/oder

Bevorzugt ist eine erfindungsgemäße schwefelvernetzbare Kautschukmischung, vorzugsweise wie vorstehend und/oder nachstehend als bevorzugt beschrieben, wobei der eine oder mehr als eine weitere Zusatzstoff in einer Gesamtmenge im Bereich von 3 bis 150 phr umfasst ist, bevorzugt von 4 bis 100 phr, weiter bevorzugt von 5 bis 80 phr.

Im Gesamtmengenanteil der weiteren Zusatzstoffe finden sich noch 0,1 bis 10 phr, bevorzugt 1 bis 8 phr, besonders bevorzugt 1,5 bis 4 phr, Zinkoxid (ZnO).

Hinsichtlich der Typen an Zinkoxid gibt es vorzugsweise keine Einschränkung. Bevorzugt ist ein Granulat und/oder ein Pulver. Bevorzugt besitzt das Zinkoxid eine BET-Oberfläche bis zu 100 m²/g, vorzugsweise in einem Bereich von 1 bis 100 m²/g. In einigen Fällen ist ein Zinkoxid bevorzugt, wobei die BET-Oberfläche kleiner 10 m²/g ist. In anderen Fällen ist ein Zinkoxid bevorzugt, wobei die BET-Oberfläche im Bereich von 10 bis 100 m²/g liegt, besonders bevorzugt sind sogenannte "nano-Zinkoxide".

Folgende, im Kontext der vorliegenden Erfindung ganz besonders bevorzugte schwefelvernetzbare Kautschukmischung (vorzugsweise wie im Text als bevorzugt beschrieben) umfasst folgendes:
(a) mindestens einen Polyisopren-Kautschuk in einer Gesamtmenge von 67 bis 90 phr,
(b) mindestens einen organosilizium-modifizierten Styrol-Butadien-Kautschuk in einer Gesamtmenge von 10 bis 33 phr und einer Glasübergangstemperatur Tg im Bereich von -36 bis -11°C,
(c) mindestens eine Kieselsäure mit einer BET-Oberfläche in einem Bereich von 255 bis 295 m²/g in einer Gesamtmenge von 42 bis 75 phr,
(d) mindestens ein geblocktes Mercaptosilan in einer Gesamtmenge von 7 bis 14 phf,
(e) mindestens ein flüssiges Polybutadien, welches endständig organosilizium-modifiziert ist, und ein Gewichtsmittleres Molekulargewicht Mw gemäß GPC von 500 bis 12000 g/mol aufweist und in einer Gesamtmenge von 3 bis 15 phr vorliegt,
(f) mindestens einen Ruß in einer Gesamtmenge im Bereich von 2 bis 8 phr,
(g) Schwefel und/oder mindestens einen Schwefeldonor, wobei der Schwefeldonor ausgewählt ist aus der Gruppe bestehend aus Thiuramdisulfiden und Thiophosphaten, und
(h) mindestens einen Vulkanisationsbeschleuniger, vorzugsweise einen Sulfenamidbeschleuniger.

Die oben beschriebene erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar.

Bevorzugt wird die erfindungsgemäße Kautschukmischung in Laufstreifen von Fahrzeugreifen verwendet, besonders bevorzugt in der Cap von Laufstreifen mit Cap/Base-Konstruktion.

Unter "Cap" ist im Kontext der vorliegenden Erfindung der mit der Fahrbahn in Berührung kommende Teil des Laufstreifens zu verstehen, der radial außen angeordnet ist (Laufstreifenoberteil oder Laufstreifencap).

Unter "Base" ist im Kontext der vorliegenden Erfindung der Teil des Laufstreifens zu verstehen, der radial innen angeordnet ist, und somit im Fahrbetrieb nicht oder nur am Ende des Reifenlebens mit der Fahrbahn in Berührung kommt (Laufstreifenunterteil oder Laufstreifenbase).

Die vorliegende Erfindung betrifft daher auch einen erfindungsgemäßen Laufstreifen umfassend die erfindungsgemäße mit Schwefel vernetzte Kautschukmischung, vorzugsweise wie im vorliegenden Text als bevorzugt definiert. Vorzugsweise umfasst der erfindungsgemäße Laufstreifen ein Profil. Er ist daher vorzugsweise ein profilierter Laufstreifen, ganz besonders bevorzugt ein LKW-Laufstreifen.

Besonders bevorzugt ist ein erfindungsgemäßer Laufstreifen aufweisend ein Profil, welches aufweist
(i) eine Profiltiefe in einem Bereich von 5 bis 20 mm, vorzugsweise von 7 bis 16 mm, besonders bevorzugt von 8 bis 13 mm; und/oder
(ii) eine, zwei oder mehr als zwei in Umfangsrichtung umlaufende Umfangsrillen mit einer flaschenförmigen Querschnittsgeometrie; und/oder
(iii) einen Profilnegativanteil von 15 % oder weniger, vorzugsweise 13 % oder weniger.

Bei der oben genannten Profiltiefe handelt es sich vorzugsweise um die maximale Profiltiefe.

Der erfindungsgemäße Laufstreifen umfasst eine, zwei oder mehr als zwei in Umfangsrichtung umlaufende Umfangsrillen mit einer flaschenförmigen Querschnittsgeometrie. Dies bedeutet, dass eine entsprechende Umfangsrille mit einem radial oberen Bereich und einem radial unteren Bereich sowie mit zwei Rillenflanken in dem Laufstreifen ausgebildet ist, wobei in dem radial oberen Bereich der Rille laterale Überhänge so an den Rillenflanken ausgebildet sind, dass eine Rillenbreite in dem radial oberen Bereich kleiner ist als in dem radial unteren Bereich. Dies wird typischerweise oft als "flaschenförmig", "flasklike" oder "tropfenförmig" bezeichnet.

Laterale Überhänge in radial oberen Bereichen von Rillen haben den Vorteil, dass bei einem solchermaßen ausgestatteten Laufstreifen im Neuzustand an der Lauffläche mehr Material vorhanden ist als ohne die Überhänge, was oft zu einem besseren Trockengriff und einem langsameren Abrieb in Radialrichtung führt. Ein weiterer oft genannter Vorteil einer geringeren Rillenbreite im radial oberen Bereich ist, dass sich die Rillenflanken an den lateralen Überhängen unter Belastung des Laufstreifens aneinander abstützen können, was typischerweise zu einer verbesserten Steifigkeit führt. Dadurch, dass die Rille in dem radial unteren Bereich eine höhere Rillenbreite aufweist als in dem radial oberen Bereich mit den lateralen Überhängen, wird gleichzeitig eine gute Drainagefunktion sichergestellt. Aufgrund des im Vergleich zu dem radial oberen Bereich erhöhten Negativvolumens im radial unteren Bereich werden die beschriebenen Rillen manchmal auch als Void Generatig Grooves bezeichnet.

Reifenprofile unterscheiden sich unter anderem durch die Größe eines Negativvolumens, oft auch als Void oder Negativanteil bezeichnet, voneinander. Im Kontext der vorliegenden Erfindung sind die Begriffe Profilnegativanteil und Negativvolumen bedeutungsgleich. Weiterhin handelt es sich dabei um das Gesamtnegativvolumen bzw. den Gesamtnegativanteil.

Grundsätzlich gilt, dass ein hohes Negativvolumen generell vorteilhaft ist für das Verhalten des Fahrzeugreifens bei Nässe, beispielsweise, um Aquaplaning zu verhindern bzw. zu minimieren. Andererseits ist ein geringes Negativvolumen wiederum vorteilhaft, um eine Geräuschentwicklung am Fahrzeugreifen gering zu halten. Diesbezüglich stellen beispielsweise gesetzliche Geräuschlimits, insbesondere in Bezug auf die Geräuschentwicklung unter Beschleunigung, neue Herausforderungen an die Reifenentwicklung. Ein weiterer potenzieller Nachteil eines hohen Negativvolumens kann auch eine verringerte Fahrstabilität und Verschlechterung der strukturellen Integrität des Fahrzeugreifens sowie eine Verschlechterung des Rollwiderstands sein, wobei letzteres sich negativ auf den Kraftstoffverbrauch auswirkt. Trotz vielfältiger Bemühungen in der Vergangenheit bleibt es daher eine Herausforderung, Reifenprofile zu schaffen, die einerseits möglichst stabil, energiesparend und leise und andererseits möglichst gut geeignet sind für nasse Fahrbahnen.

Das Gesamtnegativvolumen des erfindungsgemäßen Laufstreifens im Bereich der Bodenaufstandsfläche eines entsprechenden Reifens (zu einem erfindungsgemäßen Reifen siehe nachfolgenden Text) beträgt vorzugsweise 15 % oder weniger. Dieser Wert errechnet sich typischerweise aus dem Quotienten aus dem Gesamtnegativvolumen und dem Gesamtvolumen zwischen einer Basisfläche und einer Grundfläche im Bereich der Bodenaufstandsfläche. Die Basisfläche fällt zusammen mit jener glatten Oberfläche, welche der Fahrzeugreifen aufweisen würde, wenn keinerlei negative Profilelemente, wie etwa Rillen und keine positiven Profilelemente wie etwa Schneekanten vorgesehen wären. Die Grundfläche weist typischerweise entlang der Umfangsrichtung einen gleichbleibenden Verlauf auf; in axialen Bereichen zwischen zwei Umfangsrillen verläuft die Grundfläche für Gewöhnlich auf dem Niveau des Rillengrundes der Umfangsrillen; in Bereichen zwischen einer Umfangsrille und einer Reifenschulter verläuft üblicherweise die Grundfläche entlang der Querrichtung auf dem Niveau des Rillengrundes einer in Umfangsrichtung gemessen tiefsten Quer- oder Schrägrille. Die Bodenaufstandsfläche kann typischerweise dem statisch ermittelten Footprint bei einer Last von 70 % der maximalen Tragfähigkeit bei einem Innendruck von 85 % entsprechen, ermittelt gemäß E.T.R.T.O.-Standards. Die Angabe beziehen sich auf den Laufstreifen im Neuzustand.

Zur Verwendung in Fahrzeugreifen wird die Kautschukmischung als Fertigmischung vor der Vulkanisation bevorzugt in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann aber auch in Form eines schmalen Kautschukmischungsstreifens auf einen Reifenrohling aufgewickelt werden. Bei zweigeteilten Laufstreifen (oberer Teil: Cap und unterer Teil: Base) kann die erfindungsgemäße Kautschukmischung sowohl für die Cap als auch für die Base verwendet werden, vorzugsweise für die Cap.

Daher betrifft die vorliegende Erfindung ebenfalls einen Fahrzeugreifen, der wenigstens ein Bauteil aufweist, welches zumindest zum Teil aus einer erfindungsgemäßen mit Schwefel vernetzten Kautschukmischung, vorzugsweise wie im vorliegenden Text als bevorzugt beschrieben, besteht, wobei das Bauteil vorzugsweise ein erfindungsgemäßer Laufstreifen, vorzugsweise wie im vorliegenden Text als bevorzugt beschrieben, ist.

Unter Fahrzeugreifen werden im Kontext der vorliegenden Erfindung Fahrzeugluftreifen und Vollgummireifen, inklusive Reifen für Industrie- und Baustellenfahrzeuge, LKW-, PKW- sowie Zweiradreifen verstanden. Besonders bevorzugt ist der erfindungsgemäße Fahrzeugreifen ein LKW-Reifen.

Die Erfindung wird nun anhand von Vergleichs- und Ausführungsbeispielen, die in den Tabellen 1 und 2 zusammengefasst sind, näher erläutert, wobei die Vergleichsbeispiele mit V, die erfindungsgemäßen Beispiele mit E gekennzeichnet sind.

Das endständig Organosilicium-modifizierte flüssige Polybutadien wurde durch Reaktion von 3-Isocyant-n-Propyl-Triethoxysilan mit endständig Hydroxy-funktionalisiertem Polybutadien (Krasol LBH-P3000), analog zu der Beschreibung in der US 2002/0082333 A1, Absatz [0053], hergestellt, wobei 155 g 3-Isocyant-n-Propyl-Triethoxysilan pro kg Krasol LBH-P3000 verwendet wurden. Die Reaktion wurde bei 80 °C in einem 5L (Liter) Reaktor durchgeführt.

Die Mischungsherstellung erfolgte nach dem in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde.

Aus sämtlichen Mischungen wurden Prüfkörper durch Vulkanisation nach 20 Minuten unter Druck bei 160°C hergestellt und mit diesen Prüfkörpern für die Kautschukindustrie typische Materialeigenschaften (siehe "physikalische Eigenschaften") mit nachfolgend angegebenen Testverfahren ermittelt.

### Verwendete Bestandteile

a) NR: Naturkautschuk TSR-10;
b) SBR: SSBR, SPRINTAN SLR 4602, Fa. Trinseo; Styrolgehalt: 21%, Vinylgehalt: 63%, Tg -25°C; funktionalisiert zur chemischen Interaktion mit Kieselsäure; Mw: 420 kDa
c) SBR: SSBR, SPRINTAN SLR 3402, Fa. Trinseo; Styrolgehalt 15%, Vinylgehalt: 30%, Tg -60°C, funktionalisiert zur chemischen Interaktion mit Kieselsäure, Mw: 470 kDa
d) flüssiges, organosilizium-modifiziertes Polybutadien gemäß Formel III), Vinylgehalt: 63 %, trans-Anteil = 18 %, cis-Anteil = 19 %, T_{g} = - 56 °C, Mw = 7400 g/mol, Mn = 6300 g/mol
e) Kieselsäure Premium SW der Firma Solvay, BET-Oberfläche: ca. 275 m²/g
f) Silan gemäß der Formel IV-b): (EtO)₃Si-(CH₂)₃-S-(CH₂)₆-S-C(=O)-CH₃
g) NXT Silan (EtO)₃Si-(CH₂)₃-S-C(=O)-(CH₂)₆-CH₃ von Momentive Performance Materials
h) Alterungsschutzmittel: 6PPD + TMQ
i) Aktivatoren: Zinkoxid (ZnO) + Stearinsäure + Zinkseifen
j) Beschleuniger: DPG + TBBS
k) Schwefelspender: TBzTD

**Tabelle 1**

| **Bestandteile** | **Einheit** | **V1** | **E1** | **E2** |
|---|---|---|---|---|
| NR ^{a)} | phr | 80 | 80 | 60 |
| SBR ^{b)} | phr | 0 | 20 | 20 |
| SBR^{c)} | phr | 20 | 0 | 20 |
| fl. Polybutadien ^{d)} | phr | 7,2 | 6,5 | 6,5 |
| Ruß N220 | phr | 5 | 5 | 5 |
| Kieselsäure ^{e)} | phr | 60 | 54,5 | 52 |
| Harz (C5) | phr | 5 | 0 | 0 |
| Silan ^{f)} | phf | 10,4 | 9,5 | 0 |
| Silan ^{g)} | phf | 0 | 0 | 8,7 |
| Alterungsschutzmittel ^{h)} | phr | 3,25 | 3,25 | 4,75 |
| Ozonschutzwachs | phr | 2 | 2 | 2 |
| Aktivatoren ⁱ⁾ | phr | 9,25 | 9,25 | 9,25 |
| Beschleuniger ^{j)} | phr | 2,77 | 2,67 | 2,40 |
| Schwefel und Schwefelspender ^{k)} | phr | 1,2 | 1,2 | 1,3 |

| **physikalische Eigenschaften** | | | | |
|---|---|---|---|---|
| Härte RT | Shore A | 65 | 66 | 60 |
| M 300 RT | Mpa | 12 | 13 | 10 |
| Zugfestigkeit RT | Mpa | 22 | 23 | 22 |
| Rückprall RT | % | 50 | 47 | 51 |
| Rückprall 70°C | % | 64 | 64 | 67 |
| Bruchdehnung RT | % | 506 | 513 | 572 |
| Bruchdehnung 70°C | % | 548 | 519 | 553 |

| **Reifeneigenschaften** | | | | |
|---|---|---|---|---|
| Rollwiderstand | % | 100 | 103 | 104 |
| Nassbremsen | % | 100 | 103 | 99 |
| Cut & Chip | % | 100 | 100 | 95 |
| Abrieb | % | 100 | 100 | 100 |
| Cut & Chip (Aged) | % | 100 | 115 | 105 |
| Cracks (End of life test) | % | 100 | 115 | - |

Die physikalischen sowie die Reifeneigenschaften wurden wie folgt bestimmt:
- Shore-A-Härte (RT sowie 70°C) gemäß DIN ISO 7619-1
- Spannungswert bei 300 % Dehnung (M 300; RT), Zugfestigkeit (RT) sowie Bruchdehnung (RT sowie 70°C) gemäß DIN 53 504
- Rückprallelastizität (Rückprall; RT sowie 70°C) gemäß DIN 53 512
- Rollwiderstand gemäß ISO 28580
- Nassbremsen: ABS-Bremsen aus 80 km/h, nasser Asphalt, niedriges µ (low µ)
- Cut & Chip: visuelle Beurteilung nach 1000 km auf trockener Schotterfahrbahn, Außentemperatur T = ca. 30 °C an einem 315/70 R 22.5" Reifen
- Abrieb: Gewichtsverlust der jeweiligen Reifen in 205/75 R17.5 CHS3 nach 15000 km Straßenfahrt bei einer mittleren Temperatur von ca. 12 °C
- Aged Cut & Chip: Wiederholung des Testes wie oben beschrieben bei verkürzter Strecke nach Alterung in einer Klimakammer, 28 Tage bei 70°C
- Cracks (End of life test): visuelle Bewertung auf verschiedene Rissphänomene (z.B. cracks, cuts, Alterungs-cracks, etc.) von jeweils 87 bzw. 88 Reifen 315/70 R22.5 Continental Efficient Pro im Feldeinsatz in Europa (Spanien, Österreich, Schweiz) in der Lenkachsposition nach ca. 130 000 km. Die Auswertung bezieht sich auf die Anzahl der Reifen mit Rissen im Laufstreifenbereich im Vergleich zur Referenz (V1).

Das in Tabelle 1 gezeigte Vergleichsbeispiel V1 ist an der beispielhaften Lehre der WO 2023/104252 A1 angelehnt. Die in Tabelle 1 gezeigten physikalischen Eigenschaften wurden nach Bereitstellung der Prüfkörper bestimmt. Für die Reifeneigenschaften gilt, dass 100 % eine Normierung darstellen. Werte größer 100 % stellen eine Verbesserung dar, wohingegen Werte kleiner 100 % eine Verschlechterung gegenüber der Referenz V1 bedeuten. Die Reifeneigenschaften Rollwiederstand, Nassbremsen sowie Abrieb wurden ebenfalls unmittelbar nach Bereitstellung der Testreifen mit Reifen der Baumaße 205/75 R17.5 CHS3 durchgeführt, wohingegen "Cut & Chip", "aged Cut & Chip" sowie "End of life test" mit Testreifen der Baumaße 315/70 R22.5 durchgeführt wurden.

Eine Besonderheit stellt die Eigenschaft "Cut & Chip (Aged)" dar. Hierbei handelt es sich um eine Cut & Chip-Bestimmung nach künstlich herbeigeführter Alterung des Reifens. Dies spiegelt somit das Cut & Chip-Verhalten nach einer simulierten Lebensdauer des Reifens dar. Dieser Test erlaubt eine vergleichsweise rasche Einschätzung bezüglich der Qualität über die Lebensdauer des Reifens hinweg.

Grundsätzlich zeigt sich zunächst, dass die bereits guten Ausgangswerte der V1 in der E1 weitestgehend bestätigt werden. Dies zeigt sich bereits in den physikalischen Eigenschaften der Testkörper hinsichtlich der Härte (66 vs. 65), M 300 RT (13 vs. 12), der Zugfestigkeit RT (23 vs. 22), sowie der Bruchdehnung (506 vs. 513 und 548 vs. 519; welche als annähernd gleichwertig anzusehen sind). Bemerkenswert ist jedoch hierbei, dass eine Verbesserung im Rückprall bei RT (Indikator für Nassbremsen) zu beobachten ist, da sich der Wert von 50 % auf 47 % verringert. Dieser Unterschied ist signifikant und spiegelt sich auch in der Reifeneigenschaft Nassbremsen wider (100 vs. 103 %). Auch dieser Unterschied ist signifikant. Besonders bemerkenswert ist dabei, dass sich zeitgleich der Rollwiderstand im Reifen ebenfalls verbessert (100 vs. 103). Dies ist aus mehreren Gründen überraschend. Erstens, Rollwiderstand und Nassbremsen stehen in einem typischen Zielkonflikt, so dass die Verbesserung des einen typischerweise eine Verschlechterung des anderen nach sich zieht. Dies ist hier überraschenderweise nicht der Fall. Der Rollwiderstand verbessert sich gleichermaßen zusammen mit dem Nassbremsen. Mit anderen Worten, dieser Zielkonflikt wird im erfindungsgemäßen Reifen auf einem höheren Niveau gelöst und verhält sich zudem unerwarteterweise proportional zueinander. Zweitens, die physikalischen Eigenschaften haben einen solchen Effekt nicht erahnen lassen, da sich der Rückprall bei 70°C (Indikator für Rollwiderstand) nicht verändert hat (64 vs. 64).

Die Reifeneigenschaft Cut & Chip verhält sich unmittelbar nach Bereitstellung des Testreifens gemäß E1 unverändert (100 vs. 100). Eine überraschende Verbesserung ergibt sich jedoch für E1 für das Cut & Chip-Verhalten nach simulierter Alterung ("Cut & Chip aged"). Der Testreifen gemäß E1 vermag das hohe Niveau an Rissbeständigkeit länger aufrecht zu erhalten. Dies wird bereits durch die simulierte Alterung angedeutet und abschließend durch den "End of life test" bestätigt. Mit anderen Worten, V1 baut über die simulierte Lebensdauer bezüglich Cut & Chip deutlich stärker ab als das beim erfindungsgemäße Reifen E1 der Fall ist, bei dem der Abfall deutlich schwächer ausfällt. Beim oben genannten "End of life test" wurden sowohl die erfindungsgemäßen Reifen als auch die Vergleichsreifen hinsichtlich ihrer Rissbildung auf der Laufstreifenfläche einer visuellen Inspektion unterzogen. Hierbei hat sich gezeigt, dass bei Reifen gemäß E1 mindestens 15% weniger Reifen von signifikanter Rissbildung betroffen waren, verglichen mit Reifen gemäß V1. Der Feldtest über ca. 130 000 km wurde in verschiedenen europäischen Ländern durchgeführt (Deutschland, Österreich, Spanien), so dass zudem verschiedene klimatische Bedingungen überprüft wurden. Die oben genannte Verbesserung betrifft die mindestens erreichte Verbesserung. Vergleichsergebnisse in Spanien zeigen darüber hinaus, dass bei Tests unter vergleichsweise hohen Temperaturen eine zusätzliche Verbesserung erreicht wird (bis zu 27% weniger Reifen mit signifikanter Rissbildung). Dies bedeutet, dass der erfindungsgemäße Vorteil besonders deutlich hervortritt, wenn die thermische Beanspruchung vergleichsweise hoch ist.

Der Vergleich zwischen V1 und E1 zeigt, dass die sehr vorteilhafte verbesserte Cut & Chip-Beständigkeit über eine simulierte Reifenlebensdauer in Kombination mit einem signifikant verbessertem Nassbremsen einhergehend mit einem ebenfalls verbesserten Rollwiderstand auf eine spezifische Kombination aus Hochoberflächen-Kieselsäure, einem organosilizium-modifizierten SBR, sowie einem organosilizium-modifizierten, flüssigen Dienpolymer resultiert.

Tabelle 1 zeigt, dass das beste Ergebnis mit Testreifen gemäß E1 erzielt wird. Der der Erfindung zugrunde liegende Effekt tritt jedoch auch bei anderen Kombinationen bereits auf. Ein erfindungsgemäßer Reifen gemäß E2 weist insgesamt zwei zur chemischen Interaktion mit Kieselsäure geeignete Styrol-Butadien-Kautschuke (SBR) auf, wobei nur einer eine Glasübergangstemperatur Tg im Bereich von -45°C bis -5°C aufweist. Der zweite SBR weist eine Glasübergangstemperatur von -60°C auf, was außerhalb des Bereiches von -45°C bis -5°C liegt. Zudem wird ein alternatives Silan eingesetzt. Obwohl der Testreifen gemäß E2 zunächst eine minimale Verringerung beim Nassbremsen (99 vs. 100) und eine signifikante Verringerung bei der anfänglichen Cut & Chip Qualität (95 vs. 100) aufweist, zeigt sich auch hier die überraschende Entwicklung bei der simulierten Alterung (105 vs. 100). Auch dieser Testreifen zeigte bei ersten Test bereits eine verbesserte Langzeitbeständigkeit.

## Patentansprüche

1. Schwefelvernetzbare Kautschukmischung umfassend
(a) mindestens einen Polyisopren-Kautschuk in einer Gesamtmenge von 51 bis 95 phr,
(b) mindestens einen Styrol-Butadien-Kautschuk in einer Gesamtmenge von 5 bis 49 phr,
(c) mindestens eine Kieselsäure mit einer BET-Oberfläche in einem Bereich von 225 bis 400 m²/g in einer Gesamtmenge von 30 bis 95 phr;
(d) mindestens ein Silan in einer Gesamtmenge von 1 bis 20 phf ausgewählt aus der Gruppe bestehend aus geblockten Mercaptosilanen, ungeblockten Mercaptosilanen und polysulfidischen Silanen,
wobei
- der Styrol-Butadien-Kautschuk gemäß b) organosilizium-modifiziert ist und mindestens einer eine Glasübergangstemperatur Tg gemäß DSC in einem Bereich von -45 bis -5°C aufweist,
und die Mischung zusätzlich umfasst
(e) mindestens ein flüssiges Dienpolymer, welches organosilizium-modifiziert ist, und ein gewichtsmittleres Molekulargewicht Mw gemäß GPC in einem Bereich von 500 bis 12000 g/mol aufweist und in einer Gesamtmenge in einem Bereich von 1 bis 35 phr vorliegt.

2. Die Kautschukmischung nach Anspruch 1, wobei diese kein Harz umfasst.

3. Die Kautschukmischung nach Anspruch 1 oder 2, wobei der mindestens eine Polyisopren-Kautschuk gemäß (a) in einer Gesamtmenge von 60 bis 92 phr vorliegt, vorzugsweise von 67 bis 90 phr, am bevorzugtesten von 73 bis 85 phr.

4. Die Kautschukmischung nach einem der Ansprüche 1 bis 3, wobei der mindestens eine Styrol-Butadien-Kautschuk gemäß (b) in einer Gesamtmenge von 8 bis 40 phr vorliegt, vorzugsweise von 10 bis 33 phr, am bevorzugtesten von 15 bis 27 phr.

5. Die Kautschukmischung nach einem der Ansprüche 1 bis 4, wobei der mindestens eine Styrol-Butadien-Kautschuk eine Glasübergangstemperatur Tg im Bereich von - 40 bis -8°C aufweist, vorzugsweise von -36 bis -11°C, weiter bevorzugt von -32 bis - 14°C, am bevorzugtesten von -28 bis -17°C.

6. Die Kautschukmischung nach einem der Ansprüche 1 bis 5, wobei die Kieselsäure gemäß (c) eine BET-Oberfläche im Bereich von 230 bis 380 m²/g aufweist, vorzugsweise von 230 bis 360 m²/g, weiter bevorzugt von 235 bis 340 m²/g, besonders bevorzugt von 240 bis 310 m²/g, am bevorzugtesten von 255 bis 295 m²/g.

7. Die Kautschukmischung nach einem der Ansprüche 1 bis 6, wobei das mindestens eine Silan gemäß (d) ausgewählt ist aus der Gruppe bestehend aus geblockten Mercaptosilanen und ungeblockten Mercaptosilanen, vorzugsweise geblockten Mercaptosilanen.

8. Die Kautschukmischung nach einem der Ansprüche 1 bis 7, wobei das mindestens eine organosilizium-modifizierte, flüssige Dienpolymer gemäß (e) mit zumindest einem Rest gemäß Formel I)
I) (R1R2R3)Si-
modifiziert ist, wobei
- R1, R2, R3 unabhängig voneinander ausgewählt sind aus linearen oder verzweigten Alkoxy-, Cycloalkoxy,- Alkyl-, Cycloalkyl- oder Arylgruppen, jeweils umfassend 1 bis 20 Kohlenstoffatome; und
- der Rest gemäß Formel I) direkt oder über eine Brücke an die Polymerkette des Dienpolymers angebunden ist, wobei die Brücke auf einem divalenten, gesättigten oder ungesättigten Kohlenwasserstoff basiert, optional enthaltend cyclische, aliphatische und/oder aromatische Gruppen sowie optional in oder an dem Kohlenwasserstoff Heteroatome.

9. Die Kautschukmischung nach einem der Ansprüche 1 bis 8, wobei das mindestens eine organosilizium-modifizierte, flüssige Dienpolymer gemäß (e) ein Polybutadien (abgekürzt PB) umfasst und vorzugsweise eine Gesamtstruktur gemäß Formel III) aufweist:

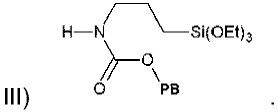

10. Die Kautschukmischung nach einem der Ansprüche 1 bis 9, die Mischung zusätzlich umfassend:
(f) mindestens einen Ruß, vorzugsweise in einer Gesamtmenge im Bereich von 0.1 bis 25 phr, vorzugsweise von 0,5 bis 20 phr, weiter bevorzugt von 1 bis 15 phr, besonders bevorzugt von 1,5 bis 10 phr, am bevorzugtesten von 2 bis 8 phr.

11. Die Kautschukmischung nach einem der Ansprüche 1 bis 10, zusätzlich umfassend:
(g) Schwefel und/oder mindestens einen Schwefeldonor, wobei der Schwefeldonor vorzugsweise ausgewählt ist aus der Gruppe bestehend aus Thiuramdisulfiden und Thiophosphaten, und/oder
(h) mindestens einen Vulkanisationsbeschleuniger, vorzugsweise einen Sulfenamidbeschleuniger.

12. Die Kautschukmischung nach einem der Ansprüche 1 bis 11 umfassend
(a) mindestens einen Polyisopren-Kautschuk in einer Gesamtmenge von 67 bis 90 phr,
(b) mindestens einen organosilizium-modifizierten Styrol-Butadien-Kautschuk in einer Gesamtmenge von 10 bis 33 phr und einer Glasübergangstemperatur Tg im Bereich von -36 bis -11°C,
(c) mindestens eine Kieselsäure mit einer BET-Oberfläche in einem Bereich von 255 bis 295 m²/g in einer Gesamtmenge von 42 bis 75 phr,
(d) mindestens ein geblocktes Mercaptosilan in einer Gesamtmenge von 7 bis 14 phf,
(e) mindestens ein flüssiges Polybutadien, welches endständig organosilizium-modifiziert ist, und ein Gewichtsmittleres Molekulargewicht Mw gemäß GPC von 500 bis 12000 g/mol aufweist und in einer Gesamtmenge von 3 bis 15 phr vorliegt,
(f) mindestens einen Ruß in einer Gesamtmenge im Bereich von 2 bis 8 phr,
(g) Schwefel und/oder mindestens einen Schwefeldonor, wobei der Schwefeldonor ausgewählt ist aus der Gruppe bestehend aus Thiuramdisulfiden und Thiophosphaten, und
(h) mindestens einen Vulkanisationsbeschleuniger, vorzugsweise einen Sulfenamidbeschleuniger.

13. Laufstreifen für einen Fahrzeugreifen umfassend eine mit Schwefel vernetzte Kautschukmischung nach einem der Ansprüche 1 bis 12.

14. Der Laufstreifen nach Anspruch 13 aufweisend ein Profil, welches aufweist
(i) eine Profiltiefe in einem Bereich von 5 bis 20 mm, vorzugsweise von 7 bis 16 mm, besonders bevorzugt von 8 bis 13 mm; und/oder
(ii) eine, zwei oder mehr als zwei in Umfangsrichtung umlaufende Umfangsrillen mit einer flaschenförmigen Querschnittsgeometrie; und/oder
(iii) einen Profilnegativanteil von 15 % oder weniger, vorzugsweise 13 % oder weniger.

15. Fahrzeugreifen, der wenigstens ein Bauteil aufweist, welches zumindest zum Teil aus einer mit Schwefel vernetzten Kautschukmischung nach einem der Ansprüche 1 bis 12 besteht, wobei das Bauteil vorzugsweise ein Laufstreifen nach einem der Ansprüche 13 oder 14 ist.
